# EUROPEAN PATENT SPECIFICATION

(11) **EP 3 046 212 B1**
(45) Date of publication and mention of the grant of the patent: **04.07.2018**
(21) Application number: 16151488.0
(22) Date of filing: 15.01.2016
(51) Int. Cl.: H02J 7/00

(54) **METHOD AND APPARATUS FOR CONTROLLING CHARGING OF TERMINAL DEVICE**
VERFAHREN UND VORRICHTUNG ZUR STEUERUNG DES LADEVORGANGS EINER ENDGERÄTEVORRICHTUNG
PROCÉDÉ ET APPAREIL POUR COMMANDER LA CHARGE D'UN DISPOSITIF TERMINAL

(30) Priority: 15.01.2015 CN 201510020874
(43) Date of publication of application: 20.07.2016
(73) Proprietor: Xiaomi Inc., Beijing 100085 (CN)
(72) Inventor: YANG, Xiaoxing, 100085 BEIJING (CN); DU, Hui, 100085 BEIJING (CN); GU, Linghua, 100085 BEIJING (CN)
(74) Representative: Delumeau, François Guy

(56) References cited:
- WO-A2-2011/143158
- US-A- 6 124 700
- US-B1- 8 907 631

## Description

### TECHNICAL FIELD

The present disclosure relates to the field of communication technology, and more particularly, to a method and an apparatus for controlling charging of a terminal device.

### BACKGROUND

With the increasingly popularity of mobile devices, when charging a mobile terminal, a user expects that charging time is as short as possible, thereby, a better user experience may be obtained by shortening the charging time of the mobile device. In the related art, the mobile device is charged by using a charging chip, and during charging, since the charging chip is always in a charging state, heat will always be generated in the whole charging process. If the mobile device needs to be fully charged at a faster speed, charging current of the charging chip needs to be improved. However, the improvement of the charging current will result in that the heat emitted by the charging chip is higher, thus reducing the user experience. In order to reduce the heat of the charging chip, the charging current of the charging chip needs to be reduced, in this case, the charging time of the charging chip has to be extended, thus reducing the charging efficiency, and further reducing the user experience.

In this respect, patent application US890763 discloses a battery charger comprising several charging chips controlled regarding their temperature.

### SUMMARY

In order to overcome problems existing in related arts, the embodiments of the present disclosure provide a method and an apparatus for controlling charging of a terminal device, so as to avoid generating an excessive amount of heat when charging the terminal device, and improving the charging efficiency of the terminal device at the same time.

According to a first aspect of embodiments of the present disclosure, there is provided a method for controlling charging of a terminal device, including:
when charging a battery of the terminal device, determining whether a first charging chip currently performing charging of the battery needs to be switched to a second charging chip waiting for performing charging of the battery; and
if it is determined that the first charging chip needs to be switched to the second charging chip, controlling the first charging chip to stop performing charging of the battery, and starting the second charging chip to perform charging of the battery.

In one embodiment, the step of determining whether the first charging chip currently performing charging of the battery needs to be switched to the second charging chip waiting for performing charging of the battery may include:
determining a first charging lasting time of the first charging chip currently performing charging of the battery; and
when the first charging lasting time reaches a preset lasting time period, determining that the first charging chip needs to be switched to the second charging chip waiting for performing charging of the battery.

In one embodiment, the method may further include:
if it is determined that the first charging lasting time does not reach the preset lasting time period, determining a temperature of the first charging chip; and
if the temperature of the first charging chip reaches a preset temperature value, determining that the first charging chip needs to be switched to the second charging chip, and performing the step of controlling the first charging chip to stop performing charging of the battery, and starting the second charging chip to perform charging of the battery.

In one embodiment, the step of determining whether the first charging chip currently performing charging of the battery needs to be switched to the second charging chip waiting for performing charging of the battery may include:
determining a temperature of the first charging chip currently performing charging of the battery; and
when the temperature of the first charging chip is higher than a preset temperature value, determining that the first charging chip currently performing charging of the battery needs to be switched to the second charging chip waiting for performing charging of the battery.

In one embodiment, the method may further include:
determining a current temperature of at least one charging chip waiting for performing charging of the battery, and obtaining at least one corresponding current temperature; and
determining the lowest temperature from the at least one current temperature, when the lowest temperature is lower than the preset temperature value, using a charging chip corresponding to the lowest temperature as the second charging chip.

In one embodiment, the method may further include:
if the lowest temperature is higher than the preset temperature value, reducing the charging current of the first charging chip performing charging of the battery.

According to a second aspect of embodiments of the present disclosure, there is provided an apparatus for controlling charging of a terminal device, including:
a first determination module configured to, when charging a battery of the terminal device, determine whether a first charging chip currently performing charging of the battery needs to be switched to a second charging chip waiting for performing charging of the battery; and
a control module configured to, when determining that the first charging chip needs to be switched to the second charging chip, control the first charging chip to stop performing charging of the battery, and start the second charging chip to perform charging of the battery.

In one embodiment, the first determination module includes:
a first determination submodule configured to determine a first charging lasting time of the first charging chip currently performing charging of the battery; and
a second determination submodule configured to, when the first determination submodule determines that the first charging lasting time reaches a preset lasting time period, determine that the first charging chip needs to be switched to the second charging chip waiting for performing charging of the battery.

In one embodiment, the apparatus further includes:
a second determination module configured to, if the first determination module determines that the first charging lasting time does not reach the preset lasting time period, determine a temperature of the first charging chip; and
a third determination module configured to, if the second determination submodule determines that the temperature of the first charging chip reaches a preset temperature value, determine that the first charging chip needs to be switched to the second charging chip, and the control module performs the step of controlling the first charging chip to stop performing charging of the battery, and starting the second charging chip to perform charging of the battery.

In one embodiment, the first determination module includes:
a third determination submodule configured to determine a temperature of the first charging chip currently performing charging of the battery; and
a fourth determination submodule configured to, when the third determination submodule determines that the temperature of the first charging chip is higher than a preset temperature value, determine that the first charging chip currently performing charging of the battery needs to be switched to the second charging chip waiting for performing charging of the battery.

In one embodiment, the apparatus further includes:
a fourth determination module configured to determine a current temperature of at least one charging chip waiting for performing charging of the battery, and obtain at least one corresponding current temperature; and
a fifth determination module configured to determine the lowest temperature from the at least one current temperature determined by the fourth determination module, and when the lowest temperature is lower than the preset temperature value, use a charging chip corresponding to the lowest temperature as the second charging chip.

In one embodiment, if the lowest temperature is higher than the preset temperature value, the control module is configured to reduce the charging current of the first charging chip performing charging of the battery.

According to a third aspect of embodiments of the present disclosure, there is provided an apparatus for controlling charging of a terminal device, including:
a processor; and
a memory for storing instructions executable by the processor;
wherein the processor is configured to:
   when charging a battery of the terminal device, determine whether a first charging chip currently performing charging of the battery needs to be switched to a second charging chip waiting for performing charging of the battery; and
   if it is determined that the first charging chip needs to be switched to the second charging chip, control the first charging chip to stop performing charging of the battery, and start the second charging chip to perform charging of the battery.

In one particular embodiment, the steps of the method for controlling charging of a terminal device are determined by computer program instructions.

Consequently, according to a fourth aspect, the invention is also directed to a computer program for executing the steps of a method for controlling charging of a terminal device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects: through determining whether the first charging chip currently performing charging of the battery needs to be switched to the second charging chip waiting for performing charging of the battery, the charging chip may perform charging of the battery at different times, thereby, in the case that the first charging chip has not yet generated more heat, by switching the first charging chip to the second charging chip to perform charging of the battery, it avoids that the charging time of the first charging chip is too long and the heat generated is higher; since the second charging chip continues to charge the battery, there is no need to reduce the charging current of the second charging chip, thus improving the charging efficiency of the charging chip.

It shall be appreciated that the above general description and the detailed description hereinafter are only illustrative and interpretative, but not for limiting the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling charging of a terminal device, according to an exemplary embodiment;
Fig. 2 is a flow chart of a method controlling charging of a terminal device, according to a first exemplary embodiment;
Fig. 3 is a flow chart of a method controlling charging of a terminal device, according to a second exemplary embodiment;
Fig. 4 is a block diagram of an apparatus for controlling charging of a terminal device, according to an exemplary embodiment;
Fig. 5 is a block diagram of another apparatus for controlling charging of a terminal device, according to an exemplary embodiment; and
Fig. 6 is a block diagram of an apparatus for controlling charging of a terminal device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

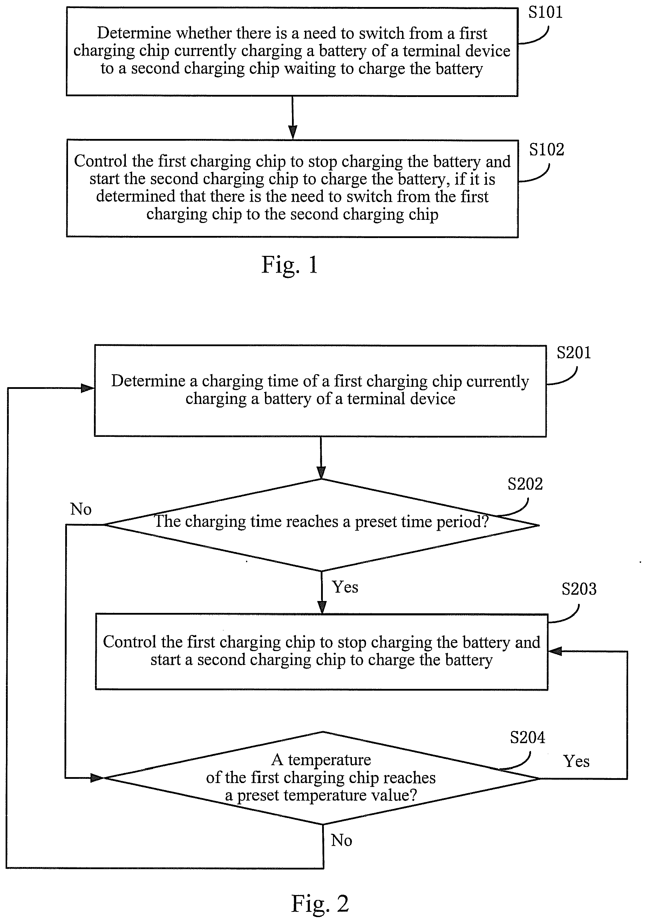

Fig. 1 is a flow chart of a method for controlling charging of a terminal device, according to an exemplary embodiment. The method for controlling charging of the terminal device may be applied in a terminal device, such as a smart mobile and a tablet. As shown in Fig. 1, the method for controlling charging of the terminal device includes the following steps S101-S102.

In step S101, when charging a battery of the terminal device, it is determined whether a first charging chip currently performing charging of the battery needs to be switched to a second charging chip waiting for performing charging of the battery.

In one embodiment, it may be determined whether the first charging chip needs to be switched to the second charging chip by monitoring whether a charging lasting time of the first charging chip reaches a preset charging time period. In another embodiment, it may also be determined whether the first charging chip needs to be switched to the second charging chip by monitoring whether a current temperature of the first charging chip reaches the preset temperature value.

In step S102, if it is determined that the first charging chip needs to be switched to the second charging chip, the first charging chip is controlled to stop performing charging of the battery, and the second charging chip is started to perform charging of the battery.

In one embodiment, the terminal device may include more than two charging chips, that is, the first charging chip currently performing charging of the battery, at least one charging chip waiting for performing charging of the battery, and the second charging chip may be determined from at least one charging chip according to setting conditions, for example, a charging chip having the lowest temperature is selected as the second charging chip according to the current temperature of at least one battery chip; or according to a charging order, a charging chip having the longest no charging interval time may also be selected from at least one charging chip as the second charging chip. For instance, at least one charging chip includes a charging chip A, a charging chip B and a charging chip C. If the charging chip having the lowest current temperature is the charging chip C, the charging chip C is used as the second charging chip; or, if the charging chip A, the charging chip B and the charging chip C are successively used to perform charging of the battery before performing charging of the battery by the first charging chip, since the no charging interval time of the charging chip A is the longest, the charging chip A is used as the second charging chip.

In the present embodiment, through determining whether the first charging chip currently performing charging of the battery needs to be switched to the second charging chip waiting for performing charging of the battery, the charging chip may perform charging of the battery at different times, thereby, in the case that the first charging chip has not yet generated more heat, by switching the first charging chip to the second charging chip to perform charging of the battery, it may avoid that higher heat is generated due to the charging time of the first charging chip is too long; since the second charging chip continues to charge the battery, there is no need to reduce the charging current of the second charging chip, thus improving the charging efficiency of the charging chip, and improving the user experience of using the terminal device.

In one embodiment, the step S101 may include:
determining a first charging lasting time of the first charging chip currently performing charging of the battery; and
when the first charging lasting time reaches a preset lasting time period, determining that the first charging chip needs to be switched to the second charging chip waiting for performing charging of the battery.

In one embodiment, the method may further include:
if it is determined that the first charging lasting time does not reach the preset lasting time period, determining a temperature of the first charging chip; and
if the temperature of the first charging chip reaches a preset temperature value, determining that the first charging chip needs to be switched to the second charging chip, and performing the step of controlling the first charging chip to stop performing charging of the battery, and starting the second charging chip to perform charging of the battery.

In one embodiment, the step S101 may include:
determining a temperature of the first charging chip currently performing charging of the battery; and
when the temperature of the first charging chip is higher than a preset temperature value, determining that the first charging chip currently performing charging of the battery needs to be switched to the second charging chip waiting for performing charging of the battery.

In one embodiment, the method may further include:
determining a current temperature of at least one charging chip waiting for performing charging of the battery, and obtaining at least one corresponding current temperature; and
determining the lowest temperature from the at least one current temperature, when the lowest temperature is lower than the preset temperature value, using a charging chip corresponding to the lowest temperature as the second charging chip.

In one embodiment, the method may further include:
if the lowest temperature is higher than the preset temperature value, reducing the charging current performing charging of the battery by the first charging chip.

How to control the charging chip to charge the battery of the terminal device, may be referred to the following embodiments.

In summary, in the case that the first charging chip has not yet generated more heat, the above method provided by the embodiments of the preset disclosure avoids that the charging time of the first charging chip is too long and the heat generated is higher by switching the first charging chip by the second charging chip to perform charging of the battery. In addition, since the second charging chip continues to charge the battery, there is no need to reduce the charging current of the second charging chip, thus improving the charging efficiency of the charging chip, and thus improving the user experience of using the terminal device.

Hereinafter, the technical solutions provided by the embodiments of the present disclosure are described by referring to the specific embodiments.

Fig. 2 is a flow chart of a method controlling charging of a terminal device, according to a first exemplary embodiment. The present embodiment utilizes the above method provided by the embodiments of the present disclosure to make an exemplary illustration by taking controlling the charging lasting time of the charging chip to determine whether the first charging chip needs to be switched to the second charging chip for example. As shown in Fig. 2, the method includes the following steps.

In step S201, when charging a battery of the terminal device, a first charging lasting time of the first charging chip currently performing charging of the battery is determined.

In one embodiment, the first charging lasting time of the first charging chip may be timed by a timer.

In step 202, it is determined whether the first charging lasting time reaches a preset lasting time period. If it is determined that the first charging lasting time reaches the preset lasting time period, step S203 is performed; and if it is determined that the first charging lasting time does not reach the preset lasting time period, step S204 is performed. In one embodiment, for example, the preset lasting time period is 1 minute, when the charging lasting time of the first charging chip reaches 1 minute, it is determined that the first charging chip may be switched to the second charging chip, and the charging of the battery is performed by the second charging chip. Similarly, when the charging lasting time of the second charging chip reaches the preset lasting time period, the first charging chip may be switched to other charging chip waiting for performing charging of the battery, thus performing uninterrupted charging of the battery.

In step S203, the first charging chip is controlled to stop performing charging of the battery, and the second charging chip is started to perform charging of the battery.

In step S204, if it is determined that the first charging lasting time does not reach the preset lasting time period, it is determined whether a temperature of the first charging chip reaches a preset temperature value. If it is determined that the preset temperature value is reached, step S203 is performed; and if it is determined that the preset temperature value is not reached, step S201 is performed.

In one embodiment, the temperature of the first charging chip may be determined by the manner of setting a temperature sensor on the first charging chip. In one embodiment, in the case that the first charging lasting time of the first charging chip has not yet reached the preset lasting time period, by monitoring the temperature of the first charging chip, it may avoid that higher heat is generated since the temperature of the first charging chip rises too quickly due to reasons, such as material aging, thus it is possible to make the first charging chip emit lower heat.

In the present embodiment, in the case that the first charging chip has not yet generated more heat, by monitoring the charging time and the current temperature of the first charging chip, it is determined whether the first charging chip needs to be switched to the second charging chip, thus ensuring that the battery is continuously charged, avoiding that the charging time of the first charging chip is too long and the heat generated is higher. In addition, since the second charging chip continues to charge the battery, there is no need to reduce the charging current of the second charging chip, thus improving the charging efficiency of the charging chip, and thus improving the user experience of using the terminal device.

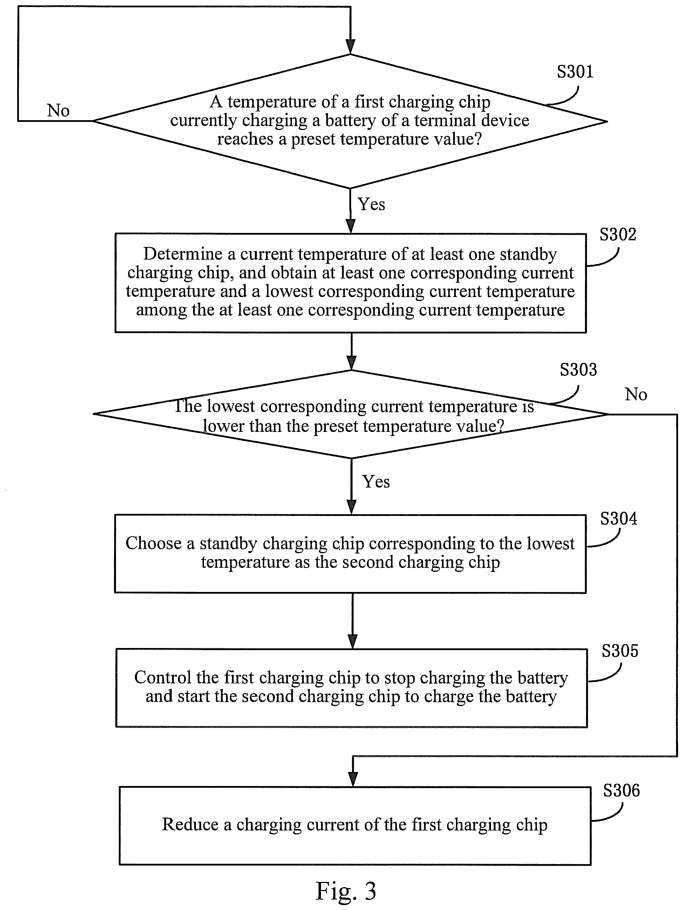

Fig. 3 is a flow chart of a method for controlling charging of a terminal device, according to a second exemplary embodiment. The present embodiment utilizes the above method provided by the embodiments of the present disclosure to make an exemplary illustration by checking the current temperature of the charging chip to determine whether the first charging chip needs to be switched to the second charging chip for example. As shown in Fig. 3, the method includes the following steps.

In step 301, when charging a battery of the terminal device, it is determined whether a temperature of the first charging chip currently performing charging of the battery is higher than a preset temperature value. If it is determined that the temperature of the first charging chip is higher than the preset temperature value, step S302 is performed; and if it is determined that the temperature of the first charging chip is lower than the preset temperature value, step S301 is repeated.

In one embodiment, the temperature of the first charging chip may be determined by setting a temperature sensor on the first charging chip.

In step S302, when the temperature of the first charging chip is higher than the preset temperature value, a current temperature of at least one charging chip waiting for performing charging of the battery is determined, and at least one corresponding current temperature is obtained. Then, step S303 is performed.

In one embodiment, in the range of controllable cost, the embodiments of the present disclosure may perform charging of the battery by the manner of setting a plurality of charging chips, for example, a first charging chip, a charging chip A, a charging chip B and a charging chip C, and the like, wherein the first charging chip is a charging chip currently performing charging of the battery, and the charging chip A, the charging chip B and the charging chip C are charging chips waiting for performing charging of the battery.

In step S303, the lowest temperature is determined from at least one current temperature, and it is determined whether the lowest temperature is lower than the preset temperature value. If the lowest temperature is lower than the preset temperature value, step S304 is performed; and if the lowest temperature is higher than the preset temperature value, step S306 is performed.

In step S304, it is determined that a charging chip corresponding to the lowest temperature is used as the second charging chip, and then step S305 is performed.

In one embodiment, for example, respective corresponding temperatures can be acquired by temperature sensors set on the charging chip A, the charging chip B and the charging chip C. For instance, the temperature value corresponding to the charging chip A is 30 degree centigrade, the temperature value corresponding to the charging chip B is 35 degree centigrade, and the temperature value corresponding to the charging chip C is 50 degree centigrade. In one embodiment, the preset temperature value is 40 degree centigrade, in this case, since both the temperature of the charging chip A and the temperatures of the charging chip B are lower than the preset temperature value, the charging chip having the lowest temperature is selected from the charging chip A and the charging chip B, that is, the charging chip A is used as the second charging chip.

In step S305, the first charging chip is controlled to stop performing charging of the battery, and the second charging chip is started to perform charging of the battery.

In step S306, if the lowest temperature is higher than the preset temperature value, charging current performing charging of the battery by the first charging chip is reduced.

In one embodiment, for example, respective corresponding temperatures can be acquired by temperature sensors set on the charging chip A, the charging chip B and the charging chip C. For instance, the temperature value corresponding to the charging chip A is 45 degree centigrade, the temperature value corresponding to the charging chip B is 48 degree centigrade, and the temperature value corresponding to the charging chip C is 50 degree centigrade. In one embodiment, the preset temperature value is 40 degree centigrade, in this case, since all the temperatures of the charging chip A, the charging chip B and the charging chip C are higher than the preset temperature value, the charging chip having the lowest temperature is selected from the charging chip A and the charging chip B, and in this case, in order to ensure the charging safety of the battery, the charging current performing charging of the battery by the first charging chip may be reduced.

In the present embodiment, by monitoring the temperature of the first charging chip, it is determined whether the first charging chip needs to be switched to the second charging chip, thus ensuring that the battery is continuously charged, and avoiding that the charging time of the first charging chip is too long and the heat generated is higher. In addition, since the second charging chip continues to charge the battery, there is no need to reduce the charging current of the second charging chip, thus improving the charging efficiency of the charging chip, and thus improving the user experience of using the terminal device.

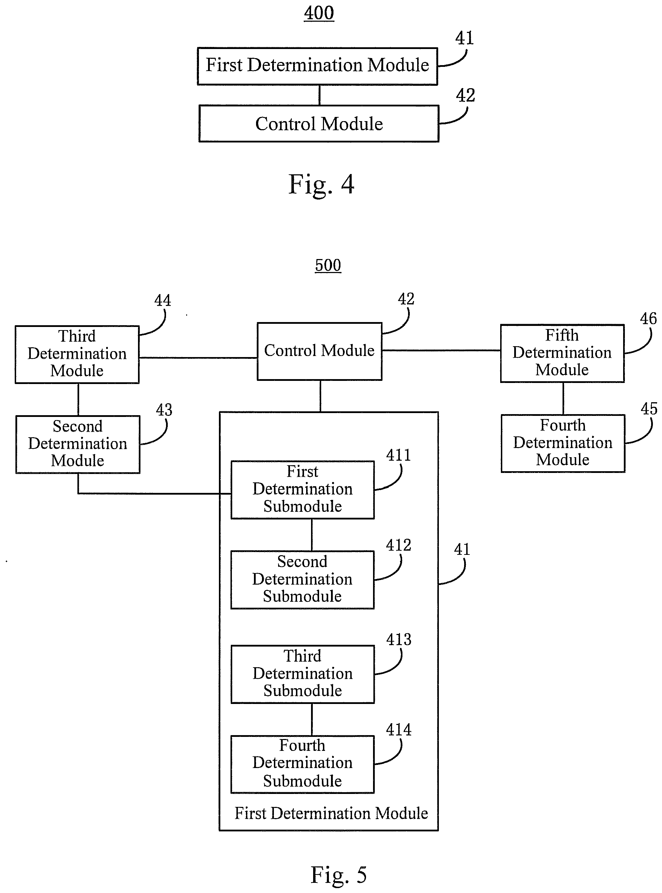

Fig. 4 is a block diagram of an apparatus for controlling charging of a terminal device, according to an exemplary embodiment. As shown in Fig. 4, the apparatus for controlling charging of the terminal device includes:
a first determination module 41 configured to, when charging a battery of the terminal device, determine whether a first charging chip currently performing charging of the battery needs to be switched to a second charging chip waiting for performing charging of the battery; and
a control module 42 configured to, if the first determination module 41 determines that the first charging chip needs to be switched to the second charging chip, control the first charging chip to stop performing charging of the battery, and start the second charging chip to perform charging of the battery.

In one embodiment, the first determination module 41 may include:
a first determination submodule 411 configured to determine a first charging lasting time of the first charging chip currently performing charging of the battery; and
a second determination submodule 412 configured to, when the first determination submodule 411 determines that the first charging lasting time reaches a preset lasting time period, determine that the first charging chip needs to be switched to the second charging chip waiting for performing charging of the battery.

In one embodiment, the apparatus may further include:
a second determination module 43 configured to, if the first determination module 411 determines that the first charging lasting time does not reach the preset lasting time period, determine a temperature of the first charging chip; and
a third determination module 44 configured to, if the second determination module 43 determines that the temperature of the first charging chip reaches a preset temperature value, determine that the first charging chip needs to be switched to the second charging chip, the control module 42 performing the step of controlling the first charging chip to stop performing charging of the battery, and starting the second charging chip to perform charging of the battery.

In one embodiment, the first determination module 41 may include:
a third determination submodule 413 configured to determine a temperature of the first charging chip currently performing charging of the battery; and
a fourth determination submodule 414 configured to, when the third determination submodule 413 determines that the temperature of the first charging chip is higher than a preset temperature value, determine that the first charging chip currently performing charging of the battery needs to be switched to the second charging chip waiting for performing charging of the battery.

In one embodiment, the apparatus may further include:
a fourth determination module 45 configured to determine a current temperature of at least one charging chip waiting for performing charging of the battery, and obtain at least one corresponding current temperature; and
a fifth determination module 46 configured to determine the lowest temperature from the at least one current temperature determined by the fourth determination module 45, and when the lowest temperature is lower than the preset temperature value, use a charging chip corresponding to the lowest temperature as the second charging chip, so as to make the first charging chip be switched to the second charging chip by the control module 42..

In one embodiment, the control module 42 is configured to, if the lowest temperature is higher than the preset temperature value, reduce charging current of the first charging chip performing charging of the battery.

With respect to the devices in the above embodiments, the specific manners for performing operations for individual modules therein have been described in detail in the embodiments regarding the related methods, which will not be elaborated herein.

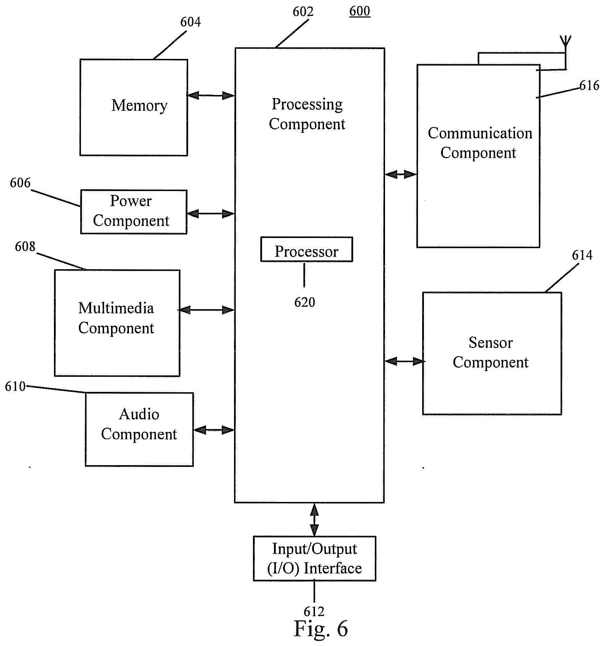

Fig. 6 is a block diagram of an apparatus for controlling charging of a terminal device, according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

## Claims

1. A method for controlling charging of a terminal device, the method comprises:
when charging a battery of the terminal device, determining (S101) whether a first charging chip currently performing charging of the battery needs to be switched to a second charging chip waiting for performing charging of the battery; and
when it is determined that the first charging chip needs to be switched to the second charging chip, controlling (S102) the first charging chip to stop performing charging of the battery, and starting the second charging chip to perform charging of the battery,
wherein the step of determining (S101) whether the first charging chip currently performing charging of the battery needs to be switched to the second charging chip waiting for performing charging of the battery comprises:
determining (S301) a temperature of the first charging chip currently performing charging of the battery; and
when the temperature of the first charging chip is higher than a preset temperature value, determining (S305) that the first charging chip currently performing charging of the battery needs to be switched to the second charging chip waiting for performing charging of the battery,
wherein the method further comprises:
determining (S302) a current temperature of at least one charging chip waiting for performing charging of the battery, and obtaining at least one corresponding current temperature; and
determining (S303) the lowest temperature from the at least one current temperature, and when the lowest temperature is lower than the preset temperature value, using (S304) the charging chip corresponding to the lowest temperature as the second charging chip.

2. The method according to claim 1, wherein the method further comprises:
if the lowest temperature is higher than the preset temperature value, reducing (S306) the charging current performing charging of the battery by the first charging chip.

3. An apparatus for controlling charging of a terminal device, the apparatus comprising:
a first determination module (41) configured to, when charging a battery of the terminal device, determine whether a first charging chip currently performing charging of the battery needs to be switched to a second charging chip waiting for performing charging of the battery; and
a control module (42) configured to, when determining that the first charging chip needs to be switched to the second charging chip, control the first charging chip to stop performing charging of the battery, and start the second charging chip to perform charging of the battery,
wherein the first determination module (41) comprises:
a first determination submodule (413) configured to determine a temperature of the first charging chip currently performing charging of the battery; and
a second determination submodule (414) configured to, when the first determination submodule (413) determines that the temperature of the first charging chip is higher than a preset temperature value, determine that the first charging chip currently performing charging of the battery needs to be switched to the second charging chip waiting for performing charging of the battery,
wherein the apparatus further comprises:
a second determination module (45) configured to determine a current temperature of at least one charging chip waiting for performing charging of the battery, and obtain at least one corresponding current temperature; and
a third determination module (46) configured to determine the lowest temperature from the at least one current temperature determined by the second determination module, and when the lowest temperature is lower than the preset temperature value, use the charging chip corresponding to the lowest temperature as the second charging chip.

4. The apparatus according to claim 3, wherein
the control module is configured to, if the lowest temperature is higher than the preset temperature value, reduce charging current of the first charging chip performing charging of the battery.

5. A computer program including instructions for executing the steps of a method for controlling charging of a terminal device according to claim 1 or 2 when said program is executed by a computer.

6. A recording medium readable by a computer and having recorded thereon a computer program including instructions for executing the steps of a method for controlling charging of a terminal device according to claim 1 or 2.

## Patentansprüche

1. Verfahren zum Steuern des Ladens eines Endgeräts, wobei das Verfahren die Schritte umfasst:
beim Laden einer Batterie des Endgeräts, Feststellen (S101), ob ein erster Ladechip, der gegenwärtig das Laden der Batterie durchführt, auf einen zweiten Ladechip umgeschaltet werden muss, der auf das Durchführen des Ladens der Batterie wartet, und
wenn festgestellt wird, dass der erste Ladechip auf den zweiten Ladechip umgeschaltet werden muss, Steuern (S102) des ersten Ladechips, das Durchführen des Ladens der Batterie zu stoppen, und Starten des zweiten Ladechips, um das Laden der Batterie durchzuführen,
wobei der Schritt des Feststellens (S101), ob der erste Ladechip, der gegenwärtig das Laden der Batterie durchführt, auf den zweiten Ladechip umgeschaltet werden muss, der auf das Durchführen des Ladens der Batterie wartet, aufweist:
Feststellen (S301) einer Temperatur des ersten Ladechips, der gegenwärtig das Laden der Batterie durchführt, und
wenn die Temperatur des ersten Ladechips höher als ein voreingestellter Temperaturwert ist, Feststellen (S305), dass der erste Ladechip, der gegenwärtig das Laden der Batterie durchführt, auf den zweiten Ladechip umgeschaltet werden muss, der auf das Durchführen des Ladens der Batterie wartet,
wobei das Verfahren ferner aufweist:
Feststellen (S302) einer gegenwärtigen Temperatur von mindestens einem Ladechip, der auf das Durchführen des Ladens der Batterie wartet, und Beschaffen mindestens einer entsprechenden gegenwärtigen Temperatur, und
Feststellen (S303) der niedrigsten Temperatur aus der mindestens einen gegenwärtigen Temperatur, und wenn die niedrigste Temperatur niedriger als der voreingestellte Temperaturwert ist, Verwenden (S304) des Ladechips, der der niedrigsten Temperatur entspricht, als den zweiten Ladechip.

2. Verfahren nach Anspruch 1, wobei das Verfahren ferner aufweist:
wenn die niedrigste Temperatur höher als der voreingestellte Temperaturwert ist, Reduzieren (S306) des Ladestroms, der das Laden der Batterie durch den ersten Ladechip durchführt.

3. Vorrichtung zur Steuerung des Ladens eines Endgeräts, wobei die Vorrichtung umfasst:
ein erstes Feststellungsmodul (41), das konfiguriert ist, beim Laden einer Batterie des Endgeräts festzustellen, ob ein erster Ladechip, der gegenwärtig das Laden der Batterie durchführt, auf einen zweiten Ladechip umgeschaltet werden muss, der auf das Durchführen des Ladens der Batterie wartet, und
ein Steuermodul (42), das konfiguriert ist, wenn festgestellt wird, dass der erste Ladechip auf den zweiten Ladechip umgeschaltet werden muss, den ersten Ladechip zu steuern, das Durchführen des Ladens der Batterie zu stoppen, und den zweiten Ladechip zu starten, um das Laden der Batterie durchzuführen,
wobei das erste Feststellungsmodul (41) aufweist:
ein erstes Feststellungsuntermodul (413), das konfiguriert ist, eine Temperatur des ersten Ladechips festzustellen, der gegenwärtig das Laden der Batterie durchführt, und
ein zweites Feststellungsuntermodul (414), das konfiguriert ist, wenn das erste Feststellungsuntermodul (413) feststellt, dass die Temperatur des ersten Ladechips höher als ein voreingestellter Temperaturwert ist, festzustellen, dass der erste Ladechip, der gegenwärtig das Laden der Batterie durchführt, auf den zweiten Ladechip umgeschaltet werden muss, der auf das Durchführen des Ladens der Batterie wartet,
wobei die Vorrichtung ferner aufweist:
ein zweites Feststellungsmodul (45), das konfiguriert ist, eine gegenwärtige Temperatur von mindestens einem Ladechip festzustellen, der auf das Durchführen des Ladens der Batterie wartet, und mindestens eine entsprechende gegenwärtige Temperatur zu beschaffen, und
ein drittes Feststellungsmodul (46), das konfiguriert ist, die niedrigste Temperatur aus der mindestens einen gegenwärtigen Temperatur festzustellen, die durch das zweite Feststellungsmodul festgestellt wird, und wenn die niedrigste Temperatur niedriger als der voreingestellte Temperaturwert ist, den Ladechip, der der niedrigsten Temperatur entspricht, als den zweiten Ladechip zu verwenden.

4. Vorrichtung nach Anspruch 3, wobei
das Steuermodul konfiguriert ist, wenn die niedrigste Temperatur höher als der voreingestellte Temperaturwert ist, den Ladestrom des ersten Ladechips zu reduzieren, der das Laden der Batterie durchführt.

5. Computerprogramm, das Befehle zum Ausführen der Schritte eines Verfahrens zum Steuern des Ladens eines Endgeräts nach Anspruch 1 oder 2 umfasst, wenn das Programm durch einen Computer ausgeführt wird.

6. Aufzeichnungsmedium, das durch einen Computer lesbar ist und auf dem ein Computerprogramm aufgezeichnet ist, das Befehle zum Ausführen der Schritte eines Verfahrens zum Steuern des Ladens eines Endgeräts nach Anspruch 1 oder 2 umfasst.

## Revendications

1. Procédé de commande de charge d'un dispositif terminal, le procédé comprenant les étapes ci-dessous consistant à :
lors de la charge d'une batterie du dispositif terminal, déterminer (S101) si une première puce de charge mettant en oeuvre une charge en cours de la batterie doit être commutée sur une seconde puce de charge attendant de mettre en oeuvre la charge de la batterie ; et
lorsqu'il est déterminé que la première puce de charge doit être commutée sur la seconde puce de charge, commander (S102) à la première puce de charge d'interrompre la mise en oeuvre de la charge de la batterie, et démarrer la seconde puce de charge en vue de mettre en oeuvre la charge de la batterie ;
dans lequel l'étape consistant à déterminer (S101) si la première puce de charge mettant actuellement en oeuvre la charge de la batterie doit être commutée sur la seconde puce de charge attendant de mettre en oeuvre la charge de la batterie, comprend les étapes ci-dessous consistant à:
déterminer (S301) une température de la première puce de charge mettant actuellement en oeuvre la charge de la batterie ; et
lorsque la température de la première puce de charge est supérieure à une valeur de température prédéfinie, déterminer (S305) que la première puce de charge mettant actuellement en oeuvre la charge de la batterie doit être commutée sur la seconde puce de charge attendant de mettre en oeuvre la charge de la batterie ;
dans lequel le procédé comprend en outre les étapes ci-dessous consistant à :
déterminer (S302) une température en cours d'au moins une puce de charge attendant de mettre en oeuvre la charge de la batterie, et obtenir au moins une température en cours correspondante ; et
déterminer (S303) la température la plus faible à partir de ladite au moins une température en cours, et lorsque la température la plus faible est inférieure à la valeur de température prédéfinie, utiliser (S304) la puce de charge correspondant à la température la plus faible en tant que la seconde puce de charge.

2. Procédé selon la revendication 1, dans lequel le procédé comprend en outre l'étape ci-dessous consistant à :
si la température la plus faible est supérieure à la valeur de température prédéfinie, réduire (S306) le courant de charge mettant en oeuvre la charge de la batterie par le biais de la première puce de charge.

3. Appareil destiné à commander la charge d'un dispositif terminal, l'appareil comprenant :
un premier module de détermination (41) configuré de manière à, lors de la charge d'une batterie du dispositif terminal, déterminer si une première puce de charge mettant en oeuvre une charge en cours de la batterie doit être commutée sur une seconde puce de charge attendant de mettre en oeuvre la charge de la batterie ; et
un module de commande (42) configuré de manière à, lorsqu'il est déterminé que la première puce de charge doit être commutée sur la seconde puce de charge, commander à la première puce de charge d'interrompre la mise en oeuvre de la charge de la batterie, et démarrer la seconde puce de charge en vue de mettre en oeuvre la charge de la batterie ;
dans lequel le premier module de détermination (41) comprend :
un premier sous-module de détermination (413) configuré de manière à déterminer une température de la première puce de charge mettant actuellement en oeuvre la charge de la batterie ; et
un deuxième sous-module de détermination (414) configuré de manière à, lorsque le premier sous-module de détermination (413) détermine que la température de la première puce de charge est supérieure à une valeur de température prédéfinie, déterminer que la première puce de charge mettant actuellement en oeuvre la charge de la batterie doit être commutée sur la seconde puce de charge attendant de mettre en oeuvre la charge de la batterie ;
dans lequel l'appareil comprend en outre :
un deuxième module de détermination (45) configuré de manière à déterminer une température en cours d'au moins une puce de charge attendant de mettre en oeuvre la charge de la batterie, et à obtenir au moins une température en cours correspondante ; et
un troisième module de détermination (46) configuré de manière à déterminer la température la plus faible à partir de ladite au moins une température en cours déterminée par le deuxième module de détermination, et lorsque la température la plus faible est inférieure à la valeur de température prédéfinie, à utiliser la puce de charge correspondant à la température la plus faible en tant que la seconde puce de charge.

4. Appareil selon la revendication 3, dans lequel :
le module de commande est configuré de manière à, si la température la plus faible est supérieure à la valeur de température prédéfinie, réduire le courant de charge de la première puce de charge mettant en oeuvre la charge de la batterie.

5. Programme informatique incluant des instructions pour exécuter les étapes d'un procédé de commande de la charge d'un dispositif terminal selon la revendication 1 ou 2 lorsque ledit programme est exécuté par un ordinateur.

6. Support d'enregistrement lisible par un ordinateur et sur lequel est enregistré un programme informatique incluant des instructions pour exécuter les étapes d'un procédé de commande de la charge d'un dispositif terminal selon la revendication 1 ou 2.
